# EUROPEAN PATENT APPLICATION

(11) **EP 4 307 410 A1**
(43) Date of publication of application: **17.01.2024**
(21) Application number: 22784877.7
(22) Date of filing: 04.04.2022
(51) Int. Cl.: H01M 4/62, H01M 50/409, H01M 4/13, H01M 10/0562, H01M 10/052

(54) **BINDER FOR SOLID ELECTROLYTE-BASED ALL-SOLID LITHIUM SECONDARY BATTERY, POSITIVE ELECTRODE FOR ALL-SOLID LITHIUM SECONDARY BATTERY COMPRISING SAME, SEPARATOR FOR ALL-SOLID LITHIUM SECONDARY BATTERY COMPRISING SAME, AND SOLID ELECTROLYTE-BASED ALL-SOLID LITHIUM SECONDARY BATTERY**

(30) Priority: 09.04.2021 KR 20210046633
(71) Applicant: Seoul National University R & DB Foundation, Seoul 08826 (KR)
(72) Inventor: CHOI, Jang Wook, Seoul 06737 (KR); LEE, Taegeun, Ansan-si, Gyeonggi-do 15320 (KR)
(74) Representative: Isarpatent
(86) International application number: PCT/KR2022/004757
(87) International publication number: WO 2022/215967

(57) **Abstract**

The present disclosure relates to a binder for an all-solid-state lithium secondary battery wherein the carboxyl group of mercaptocarboxylic acid is grafted in a butadiene polymer, wherein a molar ratio of the carboxyl group to the butadiene polymer is 0.1-30:100, a binder for an all-solid-state lithium secondary battery containing the same, an all-solid-state lithium secondary battery electrode composite containing the same, a separator in an all-solid-state lithium secondary battery containing the same, and an all-solid-state lithium secondary battery containing the same. Since the binder for an all-solid-state lithium secondary battery of the present disclosure can satisfy stability, solubility, polarity and adhesive property at the same time, it can significantly accelerate the commercialization of an all-solid-state battery based on a wet process.

## Description

### [Technical Field]

The present disclosure relates to a binder for a solid electrolyte-based all-solid-state lithium secondary battery, a cathode in an all-solid-state lithium secondary battery containing the same, a separator in an all-solid-state lithium secondary battery containing the same, and a solid electrolyte-based all-solid-state lithium secondary battery containing the same, more particularly to a binder for a solid electrolyte-based all-solid-state lithium secondary battery, which does not react with a sulfide-based solid electrolyte, is soluble in a nonpolar solvent (p-xylene) and has higher adhesive strength than a commercial LIB binder (PVDF), an cathode in an all-solid-state lithium secondary battery containing the same, an separator in an all-solid-state lithium secondary battery containing the same, and a solid electrolyte-based all-solid-state lithium secondary battery containing the same.

### [Background Art]

Lithium-ion batteries (LIBs), which have been used for a long time due to high energy and power density and good rechargeability, are difficult to be used in electric vehicles, energy storage devices, etc. because of the safety issue of flammable liquid electrolytes. Meanwhile, although all-solid-state lithium secondary batteries (ASSB) are attracting attentions as next-generation batteries capable of solving the stability problem of the LIBs through use of non-flammable solid electrolytes (SEs), there is limitation in the commercialization of the all-solid-state lithium secondary batteries due to the difficulty in cell performance improvement because of the interfacial resistance between solid particles and the absence of a scalable battery manufacturing process.

In the past few decades, many researches have been conducted on inorganic solid electrolytes such as sulfides (Li₂SP_{2S}5, Li₇P₃S₁₁, Li₁₀GeP₂S₁₂), oxides (Li₄SiO₄, Li₃PO₄, Li_{1.5}Al_{0.5}Ge_{1.5}(PO₄)₃, Li₃ₓLa_{2/3x}TiO₃) and nitrides (LisN, LiPON), and some sulfide-based solid electrolytes have been shown to exhibit ion conductivity comparable to those of organic liquid electrolytes. Among them, argyrodites (LiePSsX, X = Cl, Br, I) with some of sulfur replaced with halogen atoms, have improved ion conductivity and chemical stability. In particular, Li₆PS₅Cl has recently attracted much attention due to its high ion conductivity (1.3x10³ S cm⁻¹ at room temperature), low price and easy manufacturing method. In addition, researches on the interfacial stability between the argyrodites and LiCoO₂, LiNi_{1/3}Co_{1/3}Mn_{1/3}O₂ and LiMn₂O₄ electrode materials have shown that the reversible electrochemical behavior of the argyrodites contributes to the maintenance of the capacity of the all-solid-state lithium secondary battery and has increased the possibility of the commercialization of the all-solid-state lithium secondary battery.

Although the non-flammable solid electrolytes (SEs) have achieved high ion conductivity, many researches are still needed in terms of battery manufacturing. Especially, since sulfide-based solid electrolytes exhibit strong chemical reactivity to polar solvents and cause conflict of various battery characteristics, they act as a major obstacle to the commercialization of all-solid-state lithium secondary batteries. Depending on electrode thickness, the all-solid-state lithium secondary batteries are divided into thin-film batteries (< 10 µm) and bulk-type batteries. The bulk-type batteries for high energy density are further divided into powder compression-based pellet-type batteries and solution process-based sheet-type batteries depending on the manufacturing process.

Solution process-based sheet-type batteries have been required for large-scale production of all-solid-state lithium secondary batteries through roll-to-roll method and formation of thin and homogeneous solid electrolyte layers directly related to cell energy density. In particular, a binder is of great importance in the all-solid-state lithium secondary battery wherein all electrode materials are solids as compared to the lithium secondary battery using a liquid electrolyte. In the lithium-ion battery, lithium ions can be transported by a liquid electrolyte even when disconnection occurs between electrode materials due to repeated change in the volume of active materials. However, in the all-solid-state lithium secondary battery, once the interface of the electrode materials is disconnected due to weak adhesive strength, etc. of the binder, the electrode materials are isolated permanently in the electrode. Therefore, in the all-solid-state lithium secondary battery, the binder has a meaning beyond the simple connection of electrode materials.

Meanwhile, the adhesive property of a polymer-type binder is determined by the flexibility of the polymer chain and functional groups. The functional groups of a binder polymer exhibit adhesive property by forming chemical bonds with the surface of a current collector and electrode materials and the polymer chain with a continuous structure contributes to the improvement of the adhesive strength of the electrode by suppressing the volume expansion of the electrode materials. Whereas typical polymer binders having corresponding polymer structures, e.g. polyvinylidene fluoride (PVDF), polyvinyl alcohol (PVA) or carboxymethyl cellulose (CMC), exhibit high adhesive strength due to their strongly polar functional group, they cannot be applied as binders for the all-solid-state lithium secondary battery because they are soluble only in highly polar solvents (NMP, water, etc.).

Therefore, in the currently reported solution process-based all-solid-state lithium secondary batteries, binders of low polarity, e.g., butadiene rubber (BR), styrene-butadiene rubber (SBR), styrene-ethylene-butylene-styrene (SEBS) copolymers, nitrile-butadiene rubber (NBR), ethyl cellulose, etc., that can be dispersed in nonpolar or very less polar aprotic solvents such as xylene, toluene, etc. are being used. But, they lack adhesive strength to the electrode and the information on the binding mechanism in the electrode is also insufficient.

In addition, although the all-solid-state lithium secondary battery wherein the existing volatile organic liquid electrolyte has been replaced with a solid electrolyte, is advantageous in terms of stability, energy density and performance, commercialization and large-scale production have not been achieved because of limited manufacturing processes and complicated dry processes.

Meanwhile, unlike the existing lithium-ion batteries, the all-solid-state battery does not require a separate polymer separator and the solid electrolyte layer acts as a separator. Among the methods for creating a solid electrolyte separator layer with a thickness of tens of micrometers or smaller, the method of preparing a cast electrolyte layer by casting a slurry containing only a solid electrolyte and a binder on the all-solid-state battery electrode is considered to be the most promising. Although the adhesive strength of the binder is important for the cast electrolyte layer, the existing binders do not have enough adhesive strength and are not applicable to separators having various sizes and shapes.

The inventors of the present disclosure have conducted researches on the 'binder for an all-solid-state lithium secondary battery' to investigate the adhesive and electrochemical properties of the all-solid-state lithium secondary battery depending on the structure and polarity of the binder. As a result, it was confirmed that the stability, solubility, polarity and adhesive properties of the binder are in conflicting relationships and the development of a binder for a solution process-based all-solid-state lithium secondary battery with an optimized structure that can satisfy stability, solubility, polarity and adhesive properties at the same time is necessary.

### [Disclosure]

### [Technical Problem]

The present disclosure is directed to providing a binder for a solid electrolyte-based all-solid-state lithium secondary battery, having satisfactory stability, solubility, polarity and adhesive properties, an all-solid-state lithium secondary battery cathode containing the same, a separator in an all-solid-state lithium secondary battery containing the same, and a solid electrolyte-based all-solid-state lithium secondary battery containing the same.

### [Technical Solution]

The present disclosure provides a binder for an all-solid-state lithium secondary battery wherein a chain containing a polar functional group is grafted in a diene-based polymer, wherein the diene-based polymer is a butadiene polymer or an isoprene polymer, the polar functional group have strong attraction to an electrode or a solid electrolyte based on the dipole moment, and a molar ratio of a compound having the polar functional group to monomers of the diene-based polymer is 0.1-30.

In an exemplary embodiment of the present disclosure, the polar functional group may be any one selected from a group consisting of a carboxyl group, a hydroxyl group, an ester group, an amine group and salts thereof.

In an exemplary embodiment of the present disclosure, the binder includes a polymer wherein one or more compound selected from a group consisting of mercapto, hydrogen peroxide, peroxy acid, ozone, halogen, silane and sulfonylhydrazine is grafted to a diene-based polymer.

In an exemplary embodiment of the present disclosure, the binder is one wherein the polar functional group of a mercapto compound is grafted in the diene-based polymer, and the mercapto compound is grafted in the diene-based polymer via a thiol group.

In an exemplary embodiment of the present disclosure, the binder is one wherein the polar functional group of a carboxylic acid compound is grafted in the diene-based polymer, and the carboxylic acid compound is grafted in the diene-based polymer via an ester group.

In an exemplary embodiment of the present disclosure, a hydroxyl group is bound to carbon adjacent to the carbon of the diene-based polymer in which the carboxylic acid compound is grafted.

In an exemplary embodiment of the present disclosure, the polar functional group of the binder forms a hydrogen bond with an OH group present on the surface of a current collector and an active material.

In an exemplary embodiment of the present disclosure, the binder is soluble in one or more organic solvent selected from a group consisting of n-hexane, toluene, p-xylene, butyl butyrate, tetrahydrofuran and diethyl carbonate.

The present disclosure also provides an all-solid-state lithium secondary battery electrode composite including the binder described above, a current collector, an electrode material and a sulfide-based solid electrolyte.

In an exemplary embodiment of the present disclosure, the polar functional group of the binder forms a hydrogen bond with an OH group present on the surface of a current collector and an active material, and the present disclosure provides a separator in an all-solid-state lithium secondary battery including the binder described above.

The present disclosure also provides an all-solid-state lithium secondary battery including the electrode composite described above or the separator described above.

### [Advantageous Effects]

The present disclosure provides a binder for an all-solid-state battery, which does not react with a sulfide-based solid electrolyte, is soluble in a nonpolar solvent (p-xylene) and has adhesive strength comparable to or better than that of a commercial LIB binder (PVDF).

Since the binder for an all-solid-state lithium secondary battery of the present disclosure has satisfactory stability, solubility, polarity and adhesive property, it allows the manufacture of all-solid-state batteries through a wet solution process and can greatly accelerate the commercialization of all-solid-state batteries. It is expected that the binder for an all-solid-state lithium secondary battery of the present disclosure will be applicable to the existing wet process for manufacture of lithium secondary batteries without additional facility investment.

### [Brief Description of Drawings]

FIG. 1a schematically shows the modification of a click binder, and FIG. 1b shows the FT-IR analysis result of the binder.
FIG. 2a shows a result of evaluating adhesive property depending on the degree of modification of a click binder, FIG. 2b shows a result of evaluating adhesive property depending on the content of the click binder, and FIG. 2c shows a result of evaluating adhesive property depending on the grafting of functional groups other than carboxylic acid.
FIG. 3 shows the charge-discharge profile of a battery with a click binder introduced at the first (a) and 80th (b) cycles.
FIG. 4 shows (a) the change in the discharge capacity of a battery with a click binder introduced per absolute weight and (b) the change in the discharge capacity from the discharge capacity at the first cycle.
FIG. 5 schematically illustrates the preparation of a cast electrolyte layer.
FIG. 6 shows a result of evaluating the adhesive property of a cast electrolyte layer.
FIG. 7a schematically shows the modification of an epoxy binder, and FIG. 7b shows the FT-IR analysis result of the binder.
FIG. 8a shows a result of evaluating adhesive property depending on the degree of maleic acid modification of an epoxy binder, FIG. 8b shows a result of evaluating adhesive property depending on the degree of malonic acid modification of the epoxy binder, FIG. 8c shows a result of evaluating adhesive property depending on the degree of succinic acid modification succinic acid modification of the epoxy binder, and FIG. 8d shows a result of evaluating adhesive property depending on the degree of adipic acid modification of the epoxy binder.
FIG. 9 shows (a) the charge-discharge profile of a battery with an epoxy binder introduced at the first cycle and (b) the change in discharge capacity per absolute weight.
FIG. 10 shows the change in the discharge capacity of a battery including an epoxy binder-introduced electrode and a cast electrolyte layer from the discharge capacity at the first cycle.

### [Best Mode]

Hereinafter, the present disclosure will be described in detail referring to the attached drawings. The exemplary embodiments described below are provided as examples to fully convey the idea of the present disclosure to those skilled in the art. Therefore, the present disclosure is not limited by the exemplary embodiments described below are but may be embodied in other forms. And, in the drawings, the width, length, thickness, etc. of components may be exaggerated for convenience's sake. Throughout the specification, like reference numerals refer to like elements.

In the present disclosure, a binder for an all-solid-state lithium secondary battery prepared through a click reaction wherein a double bond of a diene-based polymer is activated by a mercapto compound and a polar functional group is grafted will be called a 'click binder'.

For example, in the present disclosure, the diene-based polymer may be a butadiene polymer or an isoprene polymer, and a click binder wherein a molar ratio of the polar functional group to the diene-based compound in the diene-based polymer is 5:100 will be called a 'BRC5 binder'.

In the present disclosure, a binder for an all-solid-state lithium secondary battery prepared through a click reaction wherein a double bond of a diene-based polymer is activated by hydrogen peroxide, peroxy acid or ozone and a polar functional group is grafted will be called an 'epoxy binder'.

For example, in the present disclosure, the diene-based polymer may be a butadiene polymer or an isoprene polymer, and a binder modified with maleic acid wherein a molar ratio of the polar functional group to the diene-based compound in the diene-based polymer is 0.5:100 will be called a 'BRCOOHme0.5 binder'.

Although adhesive property to an active material and a current collector is increased as the polarity of the binder is higher, it is difficult to find an easily dispersible solvent-binder combination in the preparation of a slurry based on a sulfide-based solid electrolyte. Therefore, polarity matching between the solvent, binder and sulfide electrolyte has been difficult in the scalable process for electrode manufacturing.

To solve this problem, the present disclosure provides a binder for an all-solid-state lithium secondary battery wherein a chain containing a polar functional group is grafted in a diene-based polymer. The polar functional group of the grafted chain binds to an electrode or a solid electrolyte through strong attraction based on the dipole moment with the electrode surface. The strong attraction may be 0.3-5 D (debye). This is advantageous in that the bonding characteristics to the current collector or solid electrolyte are increased while allowing easy dispersion.

In an exemplary embodiment of the present disclosure, among the diene-based polymers, the butadiene polymer may exist in the form of 1,2-vinyl, 1,4-cis or 1,4-trans depending on the stereostructure of the double bond, and may also be a mixture of the stereostructures. As an example, the butadiene polymer may include 30-40 mol% of 1,4-cis butadiene, 50-60 mol% of 1,4-trans butadiene and 0-10 mol% of 1,2-vinyl butadiene, or 90-100 mol% of 1,4-cis butadiene and 0-10 mol% of 1,4-trans or 2-vinyl butadiene, although not being limited thereto.

In an exemplary embodiment of the present disclosure, the polar functional group may be any of a carboxyl group, a hydroxyl group, an ester group, an amine group and salts thereof. The polar functional group may form a hydrogen bond with the electrode surface, and a molar ratio of a compound having the polar functional group to the monomer of the diene-based polymer is in a range of 0.1-30:100.

In the present disclosure, the binder may be one dissolved in n-hexane, toluene, p-xylene, butyl butyrate, tetrahydrofuran, diethyl carbonate and organic solvents having similar structures. More specifically, in an exemplary embodiment, the present disclosure provides a rubber-based binder based on the p-xylene solvent, which is currently the most widely used, which enables slurry dispersion and has improved binding ability without denaturing sulfide-based solid electrolytes. One of them is a binder for an all-solid-state battery which is soluble in a nonpolar solvent (p-xylene) and has adhesive strength higher than that of a commercial LIB binder (PVDF) without reacting with sulfide-based solid electrolytes, prepared by grafting mercaptocarboxylic acid in a butadiene polymer as a main chain polymer highly versatile in secondary batteries and adjusting the molar ratio of the mercaptocarboxylic acid to the butadiene monomer to 0.1-30:100.

In the present disclosure, the binder includes a polymer wherein one or more compound selected from a group consisting of mercapto, hydrogen peroxide, peroxy acid, ozone, halogen, silane and sulfonylhydrazine is grafted to a diene-based polymer. The compound is not specially limited as long as the double bond of the diene-based polymer can be modified. The double bond may be modified after preparing the double bond into an epoxy group, although not being limited thereto. The halogen compound may include chlorine (CI), bromine (Br) or iodine (I).

In an aspect, the present disclosure may provide a binder for an all-solid-state lithium secondary battery wherein the carboxyl group of mercaptocarboxylic acid is grafted in the butadiene polymer.

In an exemplary embodiment of the present disclosure, the binder may be one wherein the carboxyl group of mercaptocarboxylic acid is grafted in the butadiene polymer via a thiol-ene click reaction of the double bond of the butadiene polymer and a thiyl radical formed from mercaptocarboxylic acid.

The thiol-ene reaction used in the present disclosure for the synthesis of the binder is a click reaction whereby an alkyl sulfide is formed from a thiol and an alkene by a radical generated by UV irradiation. The click reaction is a coupling reaction by which two molecules are connected by through interaction between the functional groups of the two molecules. The click reaction is a very fast, high-yield, high-rate, well-controlled reaction under mild conditions, and is widely used for the synthesis of dendritic molecules, crosslinking materials, modified compounds, etc.

The epoxy reaction used in the present disclosure for the synthesis of the binder is a reaction whereby an epoxy group is formed from a double bond by a peracid produced by the reaction between hydrogen peroxide and a carboxylic acid compound, etc. In the epoxy reaction, a double bond with low reactivity is changed into a reactive epoxy functional group, allowing reaction with a new compound to form a grafted polymer. The epoxy reaction is widely used in the industrial synthesis of diene-based polymers because the reaction method and reactants are easy to handle and the reactants are inexpensive.

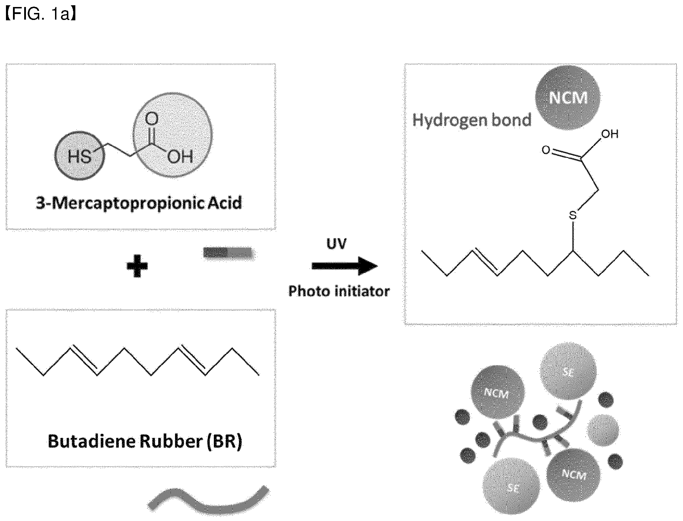

FIG. 1a schematically shows the synthesis of a click binder via a click (thiol-ene) reaction between a butadiene polymer and a mercapto compound. The carboxyl group of mercaptocarboxylic acid is grafted in the butadiene polymer via a thiol-ene click reaction of the double bond of the butadiene polymer and a thiyl radical formed from mercaptocarboxylic acid.

In the present disclosure, the butadiene polymer is used as a main chain of the binder because it is suitable for a binder for an all-solid-state battery requiring mechanical and elastic properties due to excellent mechanical properties and rubbery properties.

In the present disclosure, the mercaptocarboxylic acid is used for grafting of the binder since it contains a thiol group and a carboxyl group which allow a strong hydrogen bond with a current collector and an electrode material.

The polar functional group (e.g., carboxyl group) of the binder synthesized through the click reaction can form a strong hydrogen bond with the OH group present on the surface of the current collector or the active material.

The binder of the present disclosure, wherein the molar ratio of the carboxyl group to the butadiene in the butadiene polymer is adjusted to 0.1-30:100 has been confirmed to be suitable as a binder for an all-solid-state lithium secondary battery through test of solubility in seven solvents with different polarities, compatibility with sulfide-based solid electrolytes, adhesive property when introduced into an electrode and electrochemical stability.

The binder of the present disclosure is soluble in sulfide-based solid electrolytes, n-hexane, toluene, p-xylene, butyl butyrate, tetrahydrofuran, diethyl carbonate and organic solvents having similar structures.

The binder of the present disclosure is compatible with sulfide-based solid electrolytes and has adhesive strength comparable to or better than that of the PVDF binder.

In another aspect, the present disclosure provides an all-solid-state lithium secondary battery electrode composite including the binder described above, a current collector, an electrode material and a sulfide-based solid electrolyte. In another aspect, the present disclosure provides a separator in an all-solid-state lithium secondary battery, which includes the binder described above.

In an exemplary embodiment of the present disclosure, the carboxyl group of the binder forms a strong hydrogen bond with the OH group present on the surface of the current collector and the electrode material.

In a specific exemplary embodiment, the sulfide-based solid electrolyte is an argyrodite Li₆PS₅X (X = Cl, Br or I). The argyrodite Li₆PS₅X (X = Cl, Br or I) exhibits improved ion conductivity and chemical stability as some of sulfur is replaced with halogen atoms. More specifically, Li₆PS₅Cl (LPSCI) may be used. LPSCI is more advantageous due to high ion conductivity (1.3x10³ S cm⁻¹ at room temperature), low price and easiness of preparation.

In a specific exemplary embodiment, the electrode material is LiCoO₂, LiNi_{1/3}Co_{1/3}Mn_{1/3}O₂, LiMn₂O₄, etc.

In another aspect, the present disclosure provides an all-solid-state lithium secondary battery including the electrode composite described above or a separator. In an exemplary embodiment of the present disclosure, an all-solid-state lithium secondary battery (BRC5 ASSB) wherein an NCM711 cathode, a lithium (Li) anode and a binder exhibiting the highest adhesive strength (BRC5) have been introduced showed a discharge capacity of 169.9 mAh g⁻¹ at the first cycle, as compared to 170.7 mAh g⁻¹ of BR ASSB with the BR binder introduced as a control group, and showed capacity retention rate of 81.1% and 75.4%, respectively, after 80 cycles. The superior electrochemical performance of the BRC5 binder is attributed to the tight contact at the electrode material interface without cracks even after repeating cycling due to the strong adhesive strength of the BRC5 binder.

Hereinafter, the binder for an all-solid-state lithium secondary battery according to the present disclosure will be described through specific examples of the present disclosure. However, they are presented only as specific examples of the present disclosure and they should not be interpreted as limiting the present disclosure. The description of the contents that can be technically inferred enough by those skilled in the art will be omitted.

### [Examples]

### Example 1: Preparation of click binder

A carboxyl group was grafted into 55% 1,4-trans, 36% 1,4-cis and 9% 1,2-vinyl polybutadiene via a thiol-ene click reaction (FIG. 1a). Mercaptocarboxylic acid containing a thiol group and a carboxyl group capable of forming a strong hydrogen bond with a current collector and an electrode material was used.

The mechanism of synthesis is as follows:
Benzophenone, which is a photoinitiator, was photodecomposed by UV to generate a radical. By reacting the radical with mercaptocarboxylic acid, the hydrogen atom of the thiol group of the mercaptocarboxylic acid was extracted and a new thiyl radical was generated. By reacting the generated thiyl radical with the double bond of the polybutadiene, a polymer binder wherein the mercaptocarboxyl group was grafted in the polybutadiene at a molar ratio of 1:100, 3:100, 5:100, 10:100 or 15:100 (= mercaptocarboxyl group:butadiene) was synthesized finally.

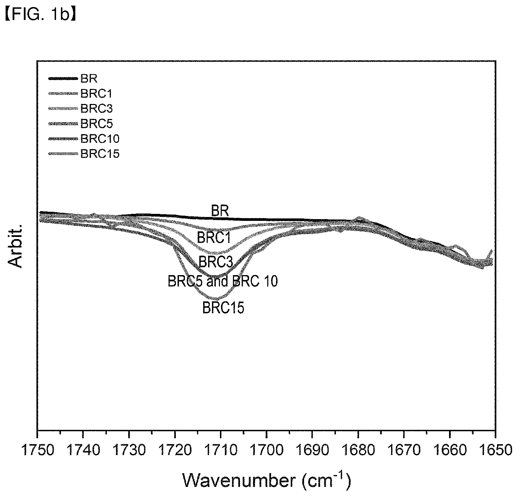

The degree of grafting of the carboxyl group in the synthesized binder was investigated qualitatively through FT-IR analysis. From the FT-IR analysis, it was confirmed that the intensity of the peak at 1710 cm⁻¹ (carbonyl peak of carboxylic acid) was increased after the click reaction as the molar ratio of the mercaptocarboxyl group used in the reaction was increased (FIG. 1b). The change in the intensity after the click reaction indicates that a click binder with the grafting degree of the carboxyl group in the binder controlled was synthesized successfully.

In order to investigate the effect of polar functional groups other than the carboxyl group on adhesive strength, a polymer binder wherein an alcohol group was grafted was synthesized using mercaptoalcohol instead of mercaptocarboxylic acid at a molar ratio of 5:100 (= mercaptoalcohol group:butadiene) (hereinafter, referred to as BRCOH5). The mechanism of synthesis was the same as that of BRC5 using mercaptocarboxylic acid except that a different mercapto compound was used.

### Test Example 1: Analysis of adhesive property of binder

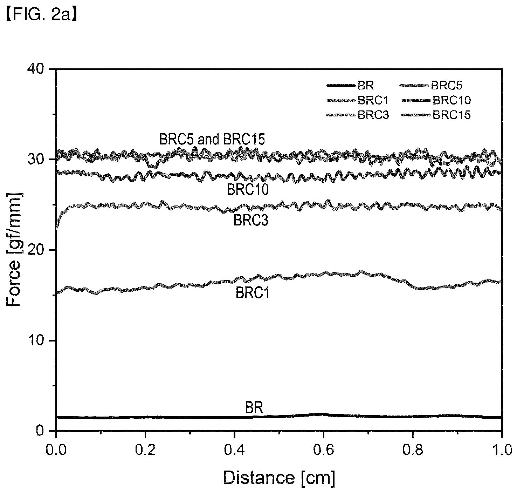

Because an all-solid-state battery involves the change in the volume of the active material and the solid electrolyte during cycling, the adhesive property of the binder that binds the electrode material is a very important factor. In order to investigate the adhesive property of the click binder, an electrode containing 2.5 wt% of the binder was prepared and a 180º peeling test was performed (FIG. 2a).

BRC1, BRC3, BRC5, BRC10, BRC15 and butadiene electrodes were prepared using p-xylene commonly used in an all-solid-state battery slurry and argyrodite (Li₆PS₅Cl, hereinafter LPSCI) was used as a sulfide-based solid electrolyte. The composition of each electrode used in the peeling test and average peeling force are summarized in Table 1.

**[Table 1]**

| | Average peeling force (gf mm⁻¹) | Electrode composition (NCM711:LPSCI:Super P:binder) |
|---|---|---|
| BR | 1.58 | 76:20:1.5:2.5 |
| BRC1 | 16.38 | 76:20:1.5:2.5 |
| BRC3 | 24.78 | 76:20:1.5:2.5 |
| BRC5 | 30.29 | 76:20:1.5:2.5 |
| BRC10 | 28.27 | 76:20:1.5:2.5 |
| BRC15 | 30.37 | 76:20:1.5:2.5 |

When the commercially available BR binder was used in a cathode composite composition (NCM711:LPSCI:Super P:BR binder = 76:20:1.5:2.5) containing a solid electrolyte used for actual cell operation, the adhesive strength was low as 1.58 gf mm⁻¹. In contrast, when the click binder was used, the adhesive strength was improved by 10 times or greater as compared to the BR binder even when the molar ratio of the grafted carboxylic acid to BR was about 1:100. It was identified that the improvement of the adhesive strength of the BR binder due to carboxylic acid grafting was saturated when the molar ratio was 5:100 or higher.

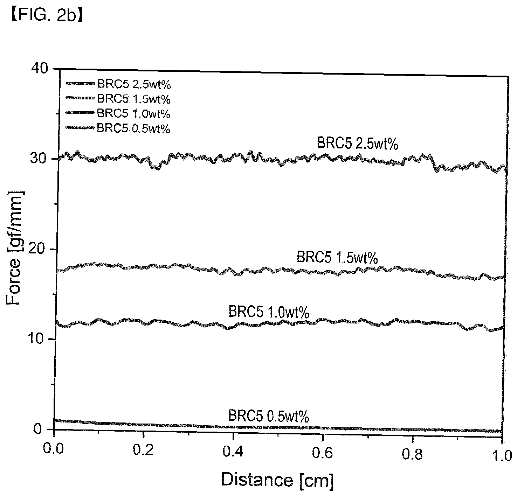

In addition, the possibility of minimizing the binder content in the electrode was confirmed for the click binder due to the high adhesive strength (FIG. 2b). Although the binder in the electrode contributes to the improvement of processability, it is disadvantageous in terms of energy density because it decreases the content of the active material in the electrode. Therefore, if the content of the binder in the electrode can be lowered within a range where the processability is ensured, it can contribute to the improvement of the energy density of the electrode. BRC5 was used as the binder for evaluation. The composition of each electrode used in the peeling test and average peeling force are summarized in Table 2.

**[Table 2]**

| | Average peeling force (gf mm⁻¹) | Electrode composition (NCM711:LPSCI:Super P:binder) |
|---|---|---|
| 0.5 wt% | 0.70 | 78:20:1.5:0.5 |
| 1.0 wt% | 12.17 | 77.5:20:1.5:1 |
| 1.5 wt% | 18.07 | 77:20:1.5:1.5 |
| 2.5 wt% | 30.29 | 76:20:1.5:2.5 |

As a result of the experiment, it was confirmed that satisfactory adhesion performance of 12.17 gf/mm was achieved even when the content of BRC5 was lowered to 1.0 wt%. This performance is more than 7 times that of the existing BR binder and confirms that not only the improvement of processability due to improved adhesive strength of the electrode but also the improvement of electrode energy density through lowering of the content of the binder in the electrode can be achieved by using the click binder.

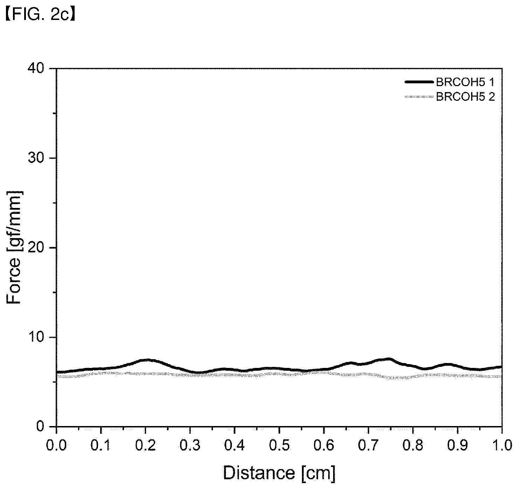

In addition, in order to investigate the effect of polar functional groups other than carboxylic acid on adhesive strength, a BRCOH5 binder wherein alcohol functional groups were grafted was synthesized and adhesion performance was evaluated (FIG. 2c). The composition of each electrode used in the peeling test and average peeling force are summarized in Table 3.

**[Table 3]**

| | Average peeling force (gf mm⁻¹) | Electrode composition (NCM711:LPSCI:Super P:binder) |
|---|---|---|
| BRCOH5 1 | 6.64 | 76:20:1.5:2.5 |
| BRCOH5 2 | 5.80 | 76:20:1.5:2.5 |

As a result of the experiment, it was confirmed that the grafting of the alcohol functional group in the binder can also improve the adhesive property of the binder. This shows that the grafting of polar functional groups other than carboxylic acid in the binder can also contribute to the improvement of the adhesive property of the binder.

### Test Example 2: Analysis of electrochemical performance of binder

The electrochemical performance of an ASSB using the click binder of the present disclosure was investigated using an ASSB consisting of an NCM711 cathode layer, an LPSCI solid electrolyte layer and a Li counter electrode. The BRC5 binder that exhibited the most superior adhesion performance or a BR binder for comparison were used for preparation of the ASSB.

An ASSB was prepared by sequentially casting a cathode composite layer slurry and a solid electrolyte (SE) slurry of a p-xylene solvent on an Al foil. The composition of each layer was NCM711 :LPSCI:Super P:BRC5 binder (or BR binder) = 76:20:1.5:2.5. Between the casting of the cathode layer and the electrolyte layer, the cathode layer was dried in vacuo at 60 ºC for 1 hour and then at room temperature for 24 hours. When the cathode composite layer, SE layer and Li layer were formed, a cell was completed through compression. The loading amount of the NCM711 active material in the cathode was 20 mg cm⁻².

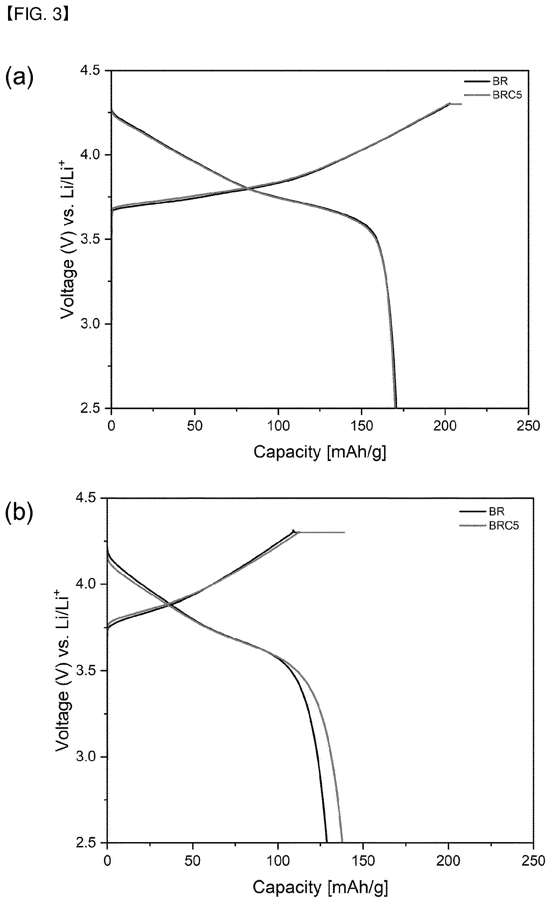

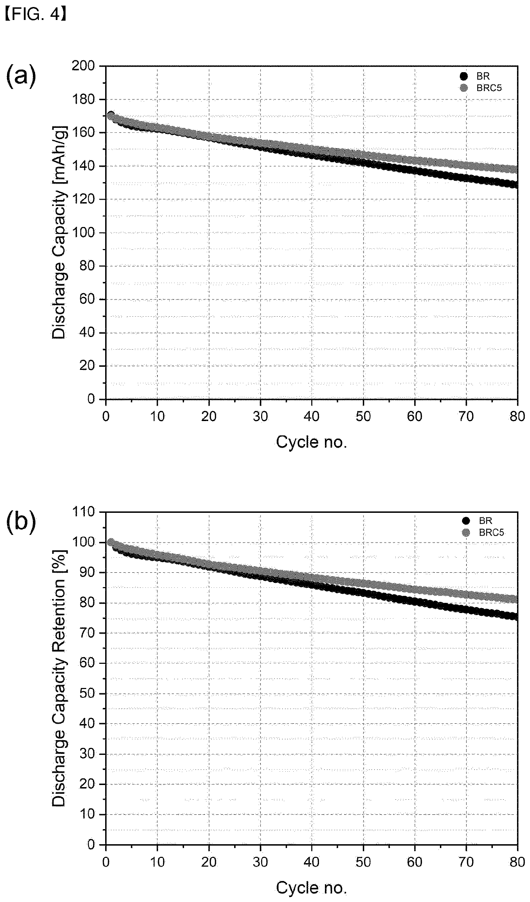

FIG. 3 shows the constant-current charge-discharge profiles of BRC5 and BR binder ASSBs at 0.1 C (19.5 mA g⁻¹) (from 2.5 to 4.3 V vs. Li). At the first cycle, the discharge capacity of the BRC5 ASSB and the BR ASSB was 170.7 mAh g⁻¹ and 169.9 mAh g⁻¹, respectively, and there was little difference in the charge-discharge profile due to overvoltage (FIG. 3a). This indicates that the increase in resistance within the electrode due to the carboxylic acid functional group of BRC5 is insignificant. It can be seen that the click binder does not negatively affect the electrochemical performance of the battery as resistance. From the charge-discharge profile at the 80th cycle, it can be seen that the discharge capacity of the BRC5 ASSB is superior to that of the BR ASSB (FIG. 3b). Whereas the BRC5 ASSB showed a discharge capacity of 137.9 mAh g⁻¹ after 80 cycles, the BR ASSB showed a discharge capacity of 128.7 mAh g⁻¹ after the same number of cycles. This corresponds to capacity retention rates of 81.1% and 75.4%, respectively. It was confirmed that the BRC5 binder had a positive effect on the life characteristics of the battery in terms of the change in absolute discharge capacity with cycles (FIG. 4a) and the trend of capacity change from the first cycle (FIG. 4b). This result indicates the importance of the adhesive strength of the binder that binds the electrode material in repeated cycling of casting-based all-solid-state batteries.

### Test Example 3: Cast electrolyte layer of binder

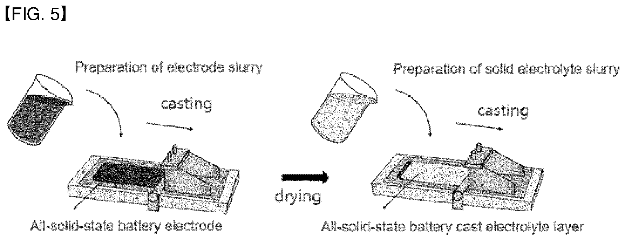

Unlike the existing lithium-ion batteries, the all-solid-state battery does not require a separate polymer separator and the solid electrolyte layer acts as a separator. Among the methods for creating a solid electrolyte separator layer with a thickness of tens of micrometers or smaller, the method of preparing a cast electrolyte layer by casting a slurry containing only a solid electrolyte and a binder on the all-solid-state battery electrode is considered to be the most promising (FIG. 5). The adhesive strength of the binder is important for the cast electrolyte layer and the click binder can be utilized as a binder for not only an all-solid-state battery electrode but also the cast electrolyte layer.

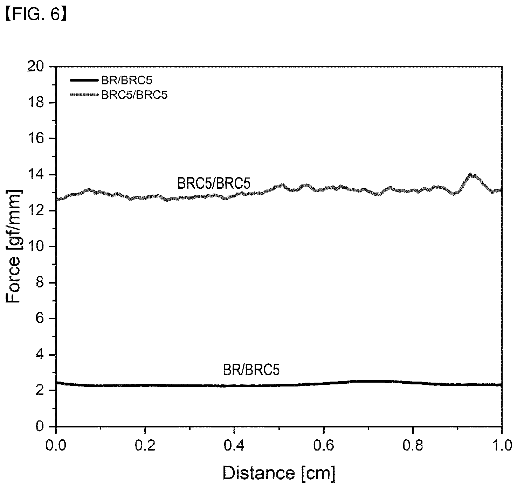

In order to confirm the effect of improvement of the adhesive property of the cast electrolyte layer by the binder of the present disclosure, a solid electrolyte-containing electrode with a cathode composite composition (NCM711 :LPSCI:Super P: BRC5 binder = 76:20:1.5:2.5) was prepared and an LPSCI film with a composition of 95 wt% LPSCI and 5 wt% binder was prepared thereon using p-xylene. For comparison, test groups were prepared by adding BR and BRC5 to the electrode and the cast electrolyte layer of the same composition and 180º peeling test was performed (FIG. 6). The test groups were denoted as electrode binder/cast electrolyte layer binder depending on the binder used in the electrode and the cast electrolyte layer. The adhesive property of the BR/BR and BRC5/BR test groups wherein the BR binder was used in the cast electrolyte layer was below the detection limit of the 180º peeling test equipment used (0.1 gf/mm or lower). This means that the existing BR binder is not suitable for use as a binder in the cast electrolyte layer for the all-solid-state battery electrode. In contrast, the adhesive strength of the BR/BRC5 and BRC5/BRC5 test groups wherein BRC5 was used in the cast electrolyte layer was 2.23 gf/mm and 13.03 gf/mm, respectively. This result shows that BRC5 is suitable for use as a binder in the cast electrolyte layer. The difference in the adhesive strength of the BR/BRC5 and BRC5/BRC5 test groups can be interpreted as a result of the adhesive property of the BR/BRC5 test group determined by the BR binder of the electrode because the adhesive strength of the BR binder used as the electrode binder is smaller than the adhesive strength of BRC5 used as the cast electrolyte layer binder. This means that a binder with strong adhesive property should be introduced into all layers to ensure the overall physical properties of a double film composed of an electrode and a cast electrolyte layer and the click binder of the present disclosure is necessary universally.

### Example 2: Preparation of epoxy binder

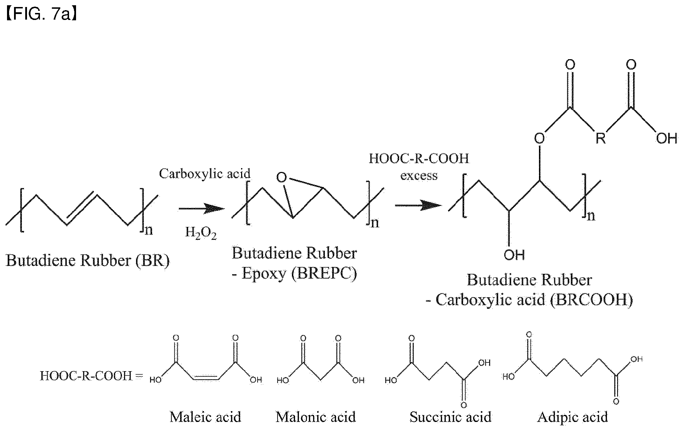

In another example of the present disclosure, a diene-based polymer is epoxidated and then it is reacted with a compound having a polar functional group to graft the compound having a polar functional group such as a carboxyl group in the diene-based polymer. After preparing an epoxy functional group in 55% 1,4-trans, 36% 1,4-cis and 9% 1,2-vinyl polybutadiene using a peracid prepared from the reaction of hydrogen peroxide and carboxylic acid, a carboxyl group was grafted via a reaction with a dicarboxylic acid (FIG. 7a). For the grafting of the carboxyl group, a dicarboxylic acid containing a carboxyl group that reacts with the epoxy functional group and a carboxyl group that can form a strong hydrogen bond with a current collector and an electrode material on the other side was used.

The mechanism of synthesis is as follows:
After dissolving polybutadiene, hydrogen peroxide and a carboxylic acid in chloroform, an epoxy functional group was formed by stirring at 40 ºC. A peroxy acid produced from the reaction of the hydrogen peroxide and the carboxylic acid was reacted with the double bond of the polybutadiene to synthesize a polymer binder wherein the epoxy was grafted in the polybutadiene at a molar ratio of 0.5:100, 1:100, 1.5:100, 2:100 or 2.5:100 (= epoxy:polybutadiene). The synthesized epoxy-modified binder was denoted as BREPCx depending on the molar ratio of the epoxy functional group to the diene-based polymer. For example, a binder modified with a 5:100 molar ratio of the epoxy functional group to the diene-based polymer will be called a 'BREPC5 binder'. After dissolving the synthesized BREPC and a dicarboxylic acid compound at a molar ratio of 1:10 (= epoxy:dicarboxylic acid) in tetrahydrofuran, a carboxylic acid-grafted polymer binder was synthesized by stirring at 60 ºC. One carboxylic acid of the dicarboxylic acid compound reacts with the epoxy group for grafting of the dicarboxylic acid compound in the polybutadiene and the other carboxylic acid remains unreacted and provides a polar functional group which provides strong binding ability to a current collector and an electrode material. The dicarboxylic acid compound was reacted in excess with the epoxy at a molar ratio 1:10 to make one carboxylic acid of the dicarboxylic acid unreacted. As the dicarboxylic acid compound, maleic acid, malonic acid, succinic acid or adipic acid was used. The synthesized epoxy binder was called BRCOOHxY (x =me (maleic acid), m (malonic acid), s (succinic acid) or a (adipic acid), Y = molar ratio of the polar functional group to the diene-based polymer) depending on the used dicarboxylic acid compound and the molar ratio of the polar functional group to the diene-based polymer. For example, a binder modified with a 1:100 molar ratio of the polar functional group to the diene-based polymer using malonic acid as the dicarboxylic acid compound will be called a 'BRCOOHm1 binder'.

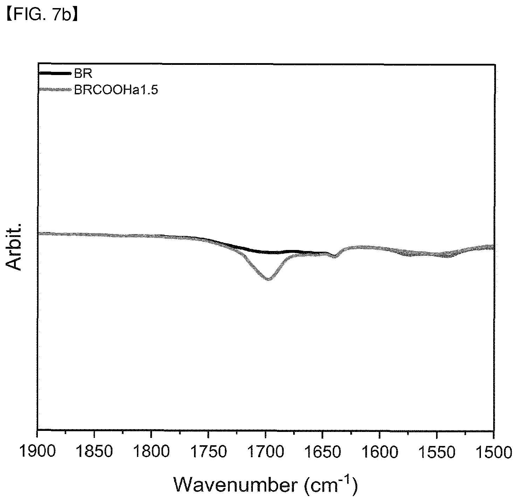

The degree of grafting of the carboxyl group in the synthesized binder was investigated qualitatively through FT-IR analysis. From the FT-IR analysis, it was confirmed that the intensity of the peak at 1700 cm⁻¹ of the BRCOOHa1.5 binder reacted with the dicarboxylic acid was increased (FIG. 7b). The change in the intensity after the epoxy reaction and the reaction with the dicarboxylic acid compound indicates that an epoxy binder with the carboxyl group grafted was synthesized successfully.

### Test Example 2: Analysis of adhesive property of binder

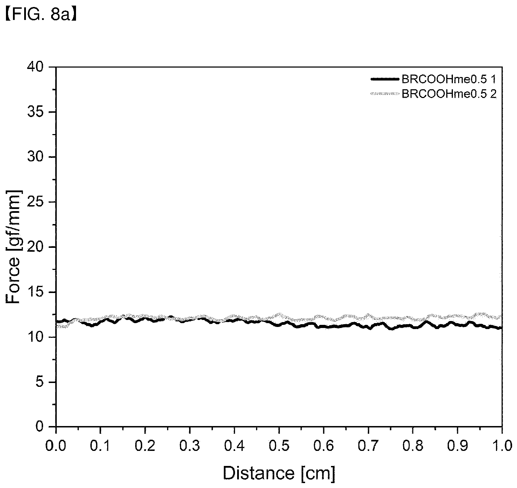

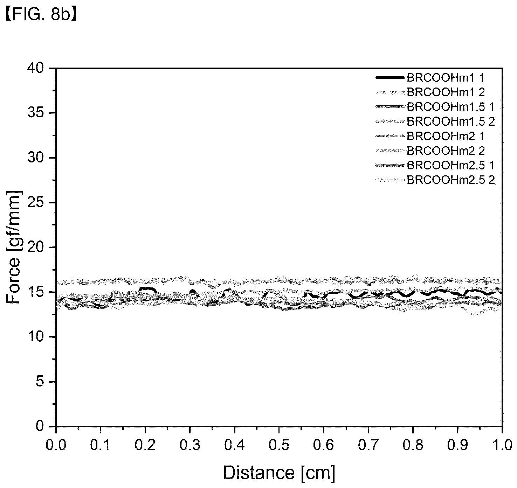

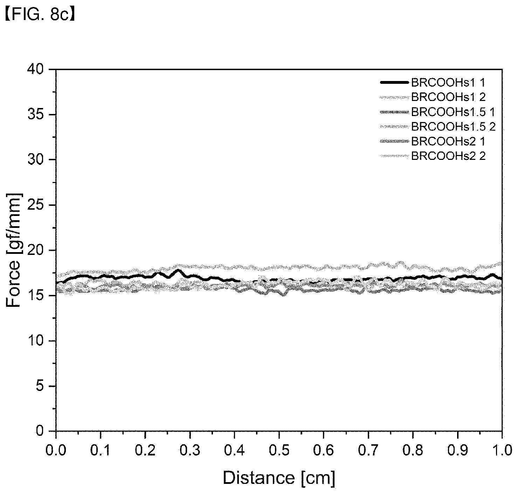

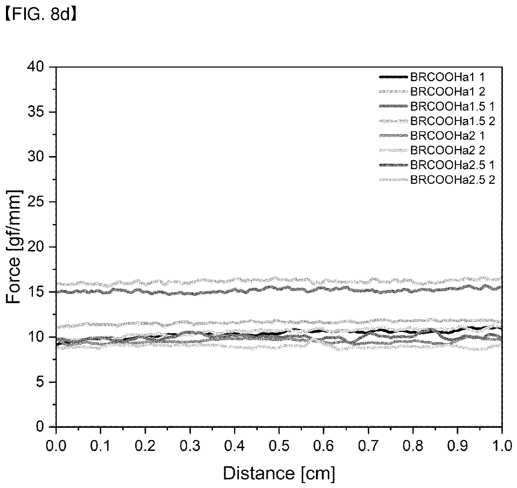

Because the all-solid-state battery involves the change in the volume of the active material and the solid electrolyte during cycling, the adhesive property of the binder that binds the electrode material is a very important factor. In order to investigate the adhesive property of the epoxy binder, an electrode containing 2.5 wt% of the binder was prepared and a 180º peeling test was performed (FIGS. 8a-8d).

BRCOOHme0.5, BRCOOHm1, 1.5, 2, 2.5, BRCOOHs1, 1.5, 2, BRCOOHa1, 1.5, 2 and 2.5 electrodes were prepared using p-xylene commonly used in an all-solid-state battery slurry and argyrodite (Li₆PS₅Cl, hereinafter LPSCI) was used as a sulfide-based solid electrolyte. The composition of each electrode used in the peeling test and average peeling force are summarized in Table 4.

**[Table 4]**

| | Average peeling force (gf mm⁻¹) | Electrode composition (NCM711:LPSCI:Super P:binder) |
|---|---|---|
| BR | 1.58 | 76:20:1.5:2.5 |
| BRCOOHme0.5 | 11.82 | 76:20:1.5:2.5 |
| BRCOOHm1 | 14.78 | 76:20:1.5:2.5 |
| BRCOOHm1.5 | 14.05 | 76:20:1.5:2.5 |
| BRCOOHm2 | 16.25 | 76:20:1.5:2.5 |
| BRCOOHm2.5 | 13.73 | 76:20:1.5:2.5 |
| BRCOOHs1 | 17.43 | 76:20:1.5:2.5 |
| BRCOOHs1.5 | 15.91 | 76:20:1.5:2.5 |
| BRCOOHs2 | 16.13 | 76:20:1.5:2.5 |
| BRCOOHa1 | 11.00 | 76:20:1.5:2.5 |
| BRCOOHa1.5 | 15.67 | 76:20:1.5:2.5 |
| BRCOOHa2 | 10.04 | 76:20:1.5:2.5 |
| BRCOOHa2.5 | 9.48 | 76:20:1.5:2.5 |

When the epoxy binder was used, the adhesive strength was improved by 7 times or greater as compared to the existing BR binder even when the molar ratio of the grafted carboxylic acid to BR was about 0.5:100. It was identified that the improvement of the adhesive strength of the BR binder due to carboxylic acid grafting was saturated when the molar ratio was 1:100 or higher. It is thought that the improvement of the adhesive strength was saturated even with a relatively small amount of the functional group because the epoxy functional group was changed into an alcohol functional group during the carboxylic acid grafting and the alcohol functional group was grafted additionally. Since the electrochemical resistance of the binder has a weak positive correlation with the content of the polar functional group, the improvement of the adhesive strength through modification with such a small amount of the functional group can be considered advantageous in terms of the resistance within the electrode with the binder introduced.

### Test Example 2: Analysis of electrochemical performance of binder

The electrochemical performance of an ASSB using the binder of the present disclosure was investigated using an ASSB consisting of an NCM711 cathode layer, an LPSCI solid electrolyte layer and a Li counter electrode. The binders used to prepare the ASSB were BRCOOHa2 and BRCOOH2.5 binders.

An ASSB was prepared by sequentially casting a cathode composite layer slurry and a solid electrolyte (SE) slurry of a p-xylene solvent on an Al foil. The composition of each layer was NCM711:LPSCI:Super P:BRCOOHa2 binder (or BRCOOH2.5 binder) = 76:20:1.5:2.5. Between the casting of the cathode layer and the electrolyte layer, the cathode layer was dried in vacuo at 60 ºC for 1 hour and then at room temperature for 24 hours. When the cathode composite layer, SE layer and Li layer were formed, a cell was completed through compression. The loading amount of the 711 active material in the cathode was 20 mg cm⁻².

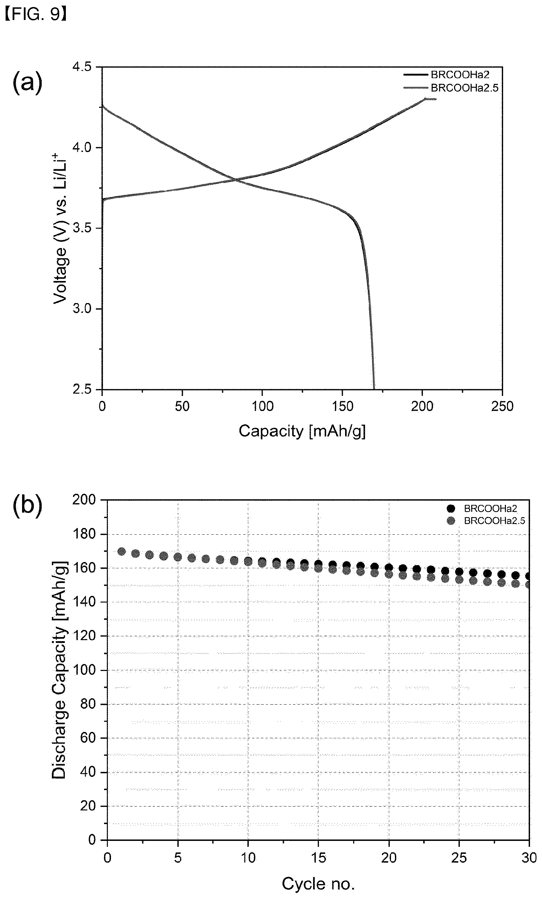

FIG. 9 (a) shows the constant-voltage charge-discharge profile of the BRCCOOHa2 and BRCOOHa2.5 ASSBs at 0.1 C (19.5 mA g⁻¹) (2.5 to 4.3 V vs. Li). At the first cycle, the discharge capacity of the BRCCOOHa2 ASSB and the BRCOOHa2.5 ASSB was 169.9 mAh g⁻¹ for both, and there was no difference in the charge-discharge profile due to overvoltage (FIG. 9a). This indicates that the increase in resistance within the electrode due to the increase of the carboxylic acid functional group content from BRCOOHa2 to BRCOOHa2.5 is insignificant. It can be seen that the epoxy binder does not negatively affect the electrochemical performance of the battery as resistance because the difference in the discharge capacity at the first cycle (169.9 mAh g⁻¹) and charge-discharge profile was insignificant as compared to the BR ASSB. The BRCOOHa2 ASSB showed a discharge capacity of 155.3 mAh g⁻¹ after 30 cycles and the BRCOOH2.5 ASSB showed a discharge capacity of 150.2 mAh g⁻¹ after the same number of cycles. This corresponds to capacity retention rates of 91.4% and 88.4%, respectively. The BR ASSB showed a discharge capacity of 151.4 mAh g⁻¹ after 30 cycles, which ponds to the capacity retention rate of 88.7%. The superior cycle characteristics of the epoxy binder indicate the importance of the adhesive strength of the binder that binds the electrode material in repeated cycling of casting-based all-solid-state batteries.

### Test Example 3: Cast electrolyte layer of binder

Unlike the existing lithium-ion batteries, the all-solid-state battery does not require a separate polymer separator and the solid electrolyte layer acts as a separator. Among the methods for creating a solid electrolyte separator layer with a thickness of tens of micrometers or smaller, the method of preparing a cast electrolyte layer by casting a slurry containing only a solid electrolyte and a binder on the all-solid-state battery electrode is considered to be the most promising (FIG. 5). The adhesive strength of the binder is important for the cast electrolyte layer and the epoxy binder can be utilized as a binder for not only an all-solid-state battery electrode but also the cast electrolyte layer.

In order to confirm the effect of the cast electrolyte layer containing the epoxy binder of the present disclosure on electrochemical performance, a solid electrolyte-containing electrode with a cathode composite composition (NCM711:LPSCI:SuperP:BRCOOHs1 binder = 76:20:1.5:2.5) was prepared and an LPSCI film with a composition of 97.5 wt% LPSCI and 2.5 wt% binder was prepared thereon using p-xylene, which was assembled with a solid electrolyte-containing electrode with an anode composite composition (Gr (graphite):LPSCI:BRCOOHs1 binder = 71:26.5:2.5) to prepare an ASSB consisting only of a casting electrode and an electrolyte layer. The loading amount of the NCM711 active material in the cathode was 20 mg cm⁻² and the capacity ratio of the cathode and the anode was 1:1.2.

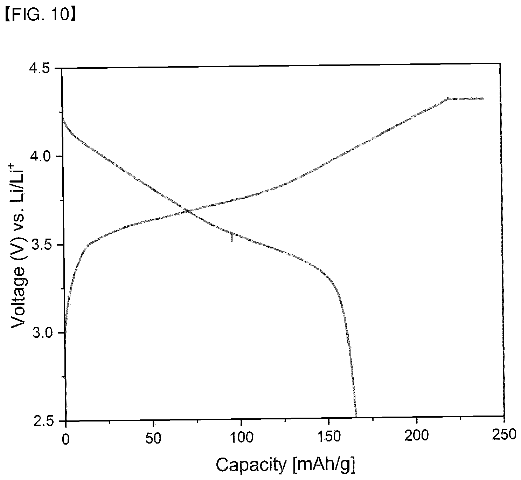

FIG. 10 shows the constant-current charge-discharge profile of the ASSB containing the BRCOOHs1 binder at 0.1 C (19.5 mA g⁻¹) (2.5 to 4.3 V vs. Li). At the first cycle, the discharge capacity was 165.4 mAh g⁻¹. This performance is similar to the discharge capacity of a lithium metal half-cell including a powder solid electrolyte separator layer with a thickness of hundreds of micrometers. This shows that the solid electrolyte separator layer containing the epoxy binder with a small thickness has no significant negative effect on electrochemical performance. Additionally, the solid electrolyte separator layer with a small thickness improves energy density per battery volume as compared to the half-cell including the existing powder solid electrolyte separator layer. This demonstrates the importance of the binder of the present disclosure in preparing a thin solid electrolyte separator layer to achieve industrially applicable energy density per volume.

While the specific exemplary embodiments of the present disclosure have been shown and described above, the present disclosure is not limited to the specific exemplary embodiments described above. It is to be understood that the present disclosure can be modified variously by those having ordinary knowledge in the art to which the present disclosure belongs and the modifications fall within the scope of the present disclosure.

## Claims

1. A binder for an all-solid-state lithium secondary battery wherein a chain comprising a polar functional group is grafted in a diene-based polymer, wherein
the diene-based polymer is a butadiene polymer or an isoprene polymer,
the polar functional group have strong attraction to an electrode or a solid electrolyte based on the dipole moment, and
a molar ratio of a compound having the polar functional group to monomers of the diene-based polymer is 0.1-30.

2. The binder for an all-solid-state lithium secondary battery according to claim 1, wherein the polar functional group may be any one selected from a group consisting of a carboxyl group, a hydroxyl group, an ester group, an amine group and salts thereof.

3. The binder for an all-solid-state lithium secondary battery according to claim 1, wherein the binder comprises a polymer wherein one or more compound selected from a group consisting of mercapto, hydrogen peroxide, peroxy acid, ozone, halogen, silane and sulfonylhydrazine is grafted to a diene-based polymer.

4. The binder for an all-solid-state lithium secondary battery according to claim 3, wherein the binder is one wherein the polar functional group of a mercapto compound is grafted in the diene-based polymer.

5. The binder for an all-solid-state lithium secondary battery according to claim 4, wherein the mercapto compound is grafted in the diene-based polymer via a thiol group.

6. The binder for an all-solid-state lithium secondary battery according to claim 1, wherein the binder is one wherein the polar functional group of a carboxylic acid compound is grafted in the diene-based polymer.

7. The binder for an all-solid-state lithium secondary battery according to claim 6, wherein the carboxylic acid compound is grafted in the diene-based polymer via an ester group.

8. The binder for an all-solid-state lithium secondary battery according to claim 7, wherein a hydroxyl group is bound to carbon adjacent to the carbon of the diene-based polymer in which the carboxylic acid compound is grafted.

9. The binder for an all-solid-state lithium secondary battery according to claim 1, wherein the polar functional group of the binder forms a hydrogen bond with an OH group present on the surface of a current collector and an active material.

10. The binder for an all-solid-state lithium secondary battery according to claim 1, wherein the binder is soluble in one or more organic solvent selected from a group consisting of n-hexane, toluene, p-xylene, butyl butyrate, tetrahydrofuran and diethyl carbonate.

11. An all-solid-state lithium secondary battery electrode composite comprising the binder according to any of claims 1 to 10, a current collector, an electrode material and a sulfide-based solid electrolyte.

12. The all-solid-state lithium secondary battery electrode composite according to claim 11, wherein the polar functional group of the binder forms a hydrogen bond with an OH group present on the surface of the current collector and the active material.

13. A separator in an all-solid-state lithium secondary battery comprising the binder according to any of claims 1 to 10.

14. An all-solid-state lithium secondary battery comprising the electrode composite according to claim 12 or the separator according to claim 13.
